# EUROPEAN PATENT APPLICATION

(11) **EP 3 279 073 A1**
(43) Date of publication of application: **07.02.2018**
(21) Application number: 16182248.1
(22) Date of filing: 01.08.2016
(51) Int. Cl.: B62K 23/06, B62K 25/04, B62J 1/08

(54) **CABLE CONTROL DEVICE FOR BICYCLE**

(71) Applicant: Kind Shock Hi-Tech Co., Ltd., Tainan City 709 (TW)
(72) Inventor: HSU, Jung Yu, TAINAN CITY 709 (TW)
(74) Representative: Cabinet Chaillot

(57) **Abstract**

A cable control device for a bicycle is mounted on a bicycle frame and contains: a clamping assembly (10), a cable controlling set (20), a positioning assembly (30), and a returning set (40). The clamping assembly includes a first clamper (11) and a second clamper (12) rotatably. The cable controlling set rotatably is accommodated in a C-shaped accommodation groove of a connecting holder (15). The cable controlling set includes a body (21), a rotary lever (22), and a steel cable (25). The positioning assembly is coupled with the connecting holder of the clamping assembly and includes at least one fixing portion (31) arranged on the body, wherein the at least one fixing portion has a tilted guiding face (312) and a locking extension (313), and the cable controlling set is coupled with a connector (32) on which a post (33) extends outwardly. The returning set is connected with the connecting holder and the positioning assembly and includes a return element (41) and a resilient element (42).

## Description

### FIELD OF THE INVENTION

The present invention relates to a cable driving structure, and more particularly to a cable control device for a bicycle which drives a bicycle apparatus to operate by using a steel cable and stops the bicycle apparatus to operation.

### BACKGROUND OF THE INVENTION

Bicycle apparatus contains a shock absorber mounted on a front fork or a rear fork and contains a position adjuster configured to adjust a portion of a seat post. The bicycle apparatus further contains a fixing rack, a light, a mud remover, a bell, a shelf, a lock, a bicycle carrying bag, an auxiliary wheel, a water bottle holder, and a stop column, etc.

A suspension system for a bicycle is disclosed in CN 101665137A and contains a steel cable defined between a braking assembly and a bicycle apparatus so as to switch or drive the bicycle apparatus to operate.

A control device for a front fork of a bicycle is taught in TW 099207874 and contains a base which includes a holder and a rotary shaft, wherein the rotary shaft inserts into a through hole of a control seat, and the holder accommodates a control cable of the bicycle. The base houses the holder, a locking mount, and a cover. The holder has a retaining groove, an abutting post, and a pulling post, wherein the retaining groove accommodates a head end of the control cable and has an aperture defined on a lower end thereof and rotatably connecting the control seat with the rotary shaft of the base. The pulling post has a contacting extension retained with a hook of the locking mount. The locking mount has an opening for accommodating a return button which includes a press stem, a resilient element, and a push stem, wherein the push stem is fixed in the base and inserts through the resilient element and the opening of the locking mount, and the press stem inserts into the opening of the locking mount from a through hole of the base so that the locking mount moves on the push stem back and forth. The cover has a pore defined on an outer surface thereof and one end of the rotary shaft of the base so as to accommodate the base.

However, the control seat hooks the abutting post, and the return button includes the press stem, the resilient element and the push stem, thus causing complicated structure and high production cost. Furthermore, the control seat is limited on a rotatable connection portion of the pulling post, so the control device gets stuck in operation.

A conventional cable control device for a bicycle is disclosed in TW 097200213 and contains a casing, an adjusting post, and a retainer. The adjusting post is rotatably connected with the casing and its first end extends out of and presses the casing, a second end of the adjusting post is coupled with a pull cable, wherein the adjusting post has a toothed block with a plurality of locking teeth. The retainer is rotatably connected with the casing and separates from the adjusting post, and the casing includes a pressing portion on which a locking toothed portion is formed relative to the toothed block of the adjusting post. The casing also includes a resilient element for pushing the retainer toward the adjusting post, hence the plurality of locking teeth of the toothed block retain with the locking toothed portion of the adjusting post.

Nevertheless, a friction occurs easily between the plurality of locking teeth of the toothed block and the locking toothed portion of the adjusting post.

A conventional driving post structure for controlling a control cable of a bicycle is disclosed in TW 096200890 and is fitted on a handlebar of the bicycle, wherein the control cable is connected with an adjustable screwing cover of a lock device on a front fork, such that the control cable is controlled to drive the adjustable screwing cover, and a shock absorber on the front fork is locked or unlocked. The conventional driving post structure further contains an arcuate fixing mount, and the fixing mount has an arcuate groove defined on one side thereof so as to house a pulling seat, the arcuate groove has a locking trough and a fixing trough, and the fixing mount further has a recess and an extension with a through hole so as to accommodate the control cable which couples with the pulling seat. The fixing mount further a connector, and the pulling seat has an arcuate holder, one end of which has a drive stem, and the drive stem has a positioning trough, wherein the arcuate holder has an arc-shaped section and has a bolt element inserted through two sides of the arcuate holder respectively, such that the control cable inserts through the arc-shaped section to fix in the positioning trough of the drive stem, and the bolt element inserts into the arcuate groove of the fixing mount. An arcuate fitting sleeve has an end portion formed on a first side thereof and has an arc-shaped notch arranged on a second side thereof, wherein a first end of the fitting sleeve is rotatably connected with a bottom of the fixing mount and a second end of the fitting sleeve is screwed with an end portion of the fixing mount by using a threaded bolt, such that between the fixing mount and the arc-shaped notch of the arcuate fitting sleeve is defined a through trench for housing the handlebar. However, the bolt element moves in the arcuate groove of the fixing mount easily, and a friction occurs easily between the locking trough and the positioning trough.

The present invention has arisen to mitigate and/or obviate the afore-described disadvantages.

### SUMMARY OF THE INVENTION

The present invention provides a cable control device for a bicycle being mounted on a bicycle frame and comprising: a clamping assembly including a first clamper and a second clamper rotatably connected with the first clamper by using a fixing bolt so as to form a clamping portion for clamping the bicycle frame; a cable controlling set rotatably connected with the clamping assembly by using a body and rotatably moving on the clamping assembly, the cable controlling set including a rotary lever extending outwardly from the body, and the cable controlling set including a steel cable, a first end of which inserts into the body, and a second end of the steel cable connecting with a bicycle apparatus, such that the rotary lever is pressed or pulled to drive the bicycle apparatus to operate; a positioning assembly coupled with the clamping assembly and including at least one fixing portion arranged on the body, wherein the at least one fixing portion has a tilted guiding face and a locking extension formed on a first end of one side surface thereof and adjacent to the tilted guiding face, the cable controlling set is coupled with a connector on which a post extends outwardly and inserts into the first clamper, wherein a distal end of the post abuts against the at least one fixing portion, such that the rotary lever is pulled or pressed to drive the body and the at least one fixing portion to rotate, and the at least one fixing portion pushes the post and the connector to move linearly, wherein when the post contacts with the locking extension, the body and the rotary lever are locked; a returning set being coaxial with the positioning assembly and being in connection with the clamping assembly and the positioning assembly, wherein the returning set includes a return element contacting with the connector and screwing with the screwing element, and the return element inserts into the connector, the returning set also includes a resilient element for pushing the return element back to an original position, wherein the return element pushes the connector away from the clamping assembly so as to remove the post from the locking extension, and the steel cable pulls the body back to an original position.

The primary objective of the present invention is to provide a cable control device for a bicycle in which the returning set and the positioning assembly are connected with body and are accommodated in the C-shaped accommodation groove of the connecting holder securely.

Secondary objective of the present invention is to provide a cable control device for a bicycle in which he returning set and the positioning assembly are coaxial with each other so as to move simultaneously and to change a distance between the post and the at least one fixing portion, thus locking, unlocking, and releasing the bicycle apparatus.

Further objective of the present invention is to provide a cable control device for a bicycle in which each of the positioning assembly and the returning set is connected with the first side surface or the second side surface of the connecting holder according to using requirements.

Another objective of the present invention is to provide a cable control device for a bicycle in which each of the positioning assembly and the returning set is connected with the first side surface or the second side surface of the connecting holder of the clamping assembly, and the returning set and the positioning assembly are connected with body, thus simplifying manufacture process, reducing production cost, and obtaining easy operation.

Also another objective of the present invention is to provide a cable control device for a bicycle which is simplified by connecting the returning set and the positioning assembly with the first side surface or the second side surface of the connecting holder of the clamping assembly, thus decreasing friction among related components and prolonging service life.

### BRIEF DESCRIPTION OF THE DRAWINGS

FIG. 1 is a perspective view showing the assembly of a cable control device for a bicycle according to a preferred embodiment of the present invention.
FIG. 2 is a perspective view showing the exploded components of the cable control device for the bicycle according to the preferred embodiment of the present invention.
FIG. 3 is a cross sectional view showing the assembly of the cable control device for the bicycle according to the preferred embodiment of the present invention.
FIG. 4 is another cross sectional view showing the assembly of the cable control device for the bicycle according to the preferred embodiment of the present invention.
FIG. 5 is also another cross sectional view showing the assembly of the cable control device for the bicycle according to the preferred embodiment of the present invention.
FIG. 6 is a cross sectional view showing the operation of the cable control device for the bicycle according to the preferred embodiment of the present invention.
FIG. 7 is a cross sectional view showing the operation of a part of the cable control device for the bicycle according to the preferred embodiment of the present invention.
FIG. 8 is another cross sectional view showing the operation of a part of the cable control device for the bicycle according to the preferred embodiment of the present invention.
FIG. 9 is another cross sectional view showing the operation of the cable control device for the bicycle according to the preferred embodiment of the present invention.
FIG. 10 is also another cross sectional view showing the operation of a part of the cable control device for the bicycle according to the preferred embodiment of the present invention.
FIG. 11 is still another cross sectional view showing the operation of the cable control device for the bicycle according to the preferred embodiment of the present invention.
FIGS. 12 to 14 are a cross sectional view showing another operation of the cable control device for the bicycle according to the preferred embodiment of the present invention, respectively.
FIG. 15 is a perspective view showing the operation of the cable control device for the bicycle according to the preferred embodiment of the present invention, respectively.
FIG. 16 is another cross sectional view showing the operation of the cable control device for the bicycle according to the preferred embodiment of the present invention, respectively.
FIG. 17 is a perspective view showing the exploded components of a cable control device for a bicycle according to another preferred embodiment of the present invention.
FIG. 18 is a cross sectional view showing the operation of a part of the cable control device for the bicycle according to said another preferred embodiment of the present invention.

### DETAILED DESCRIPTION OF THE PREFERRED EMBODIMENTS

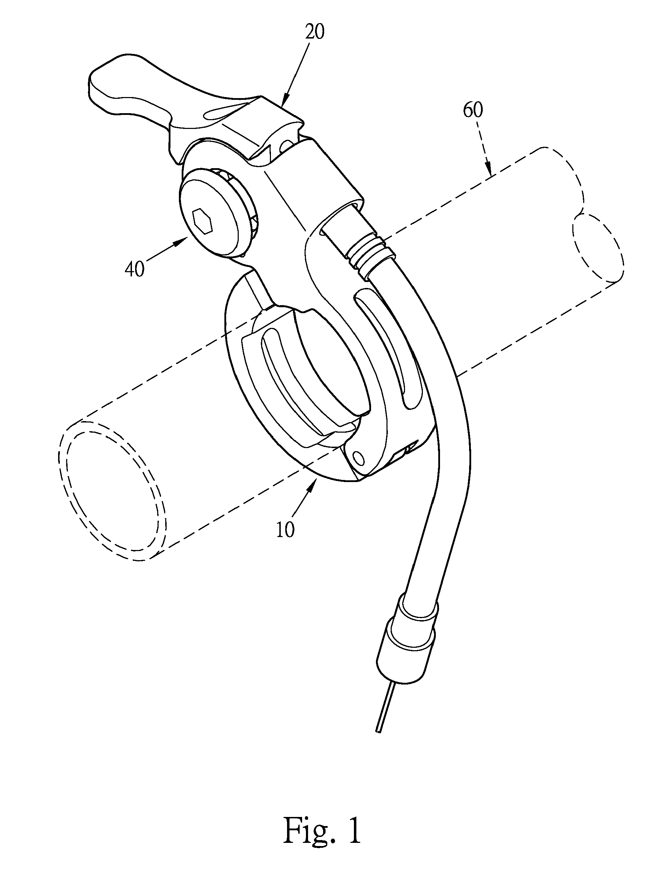

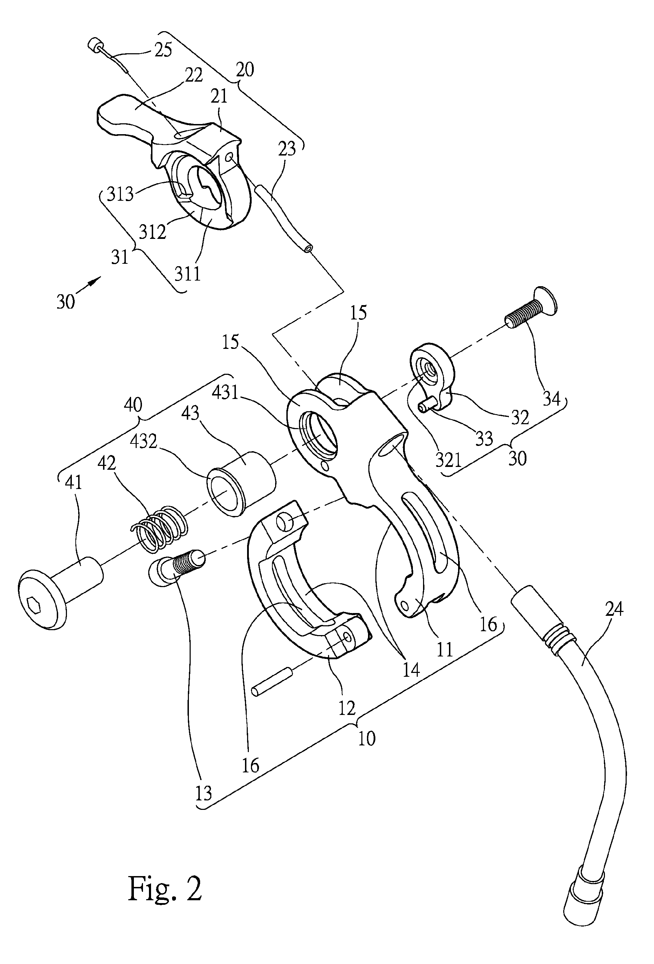

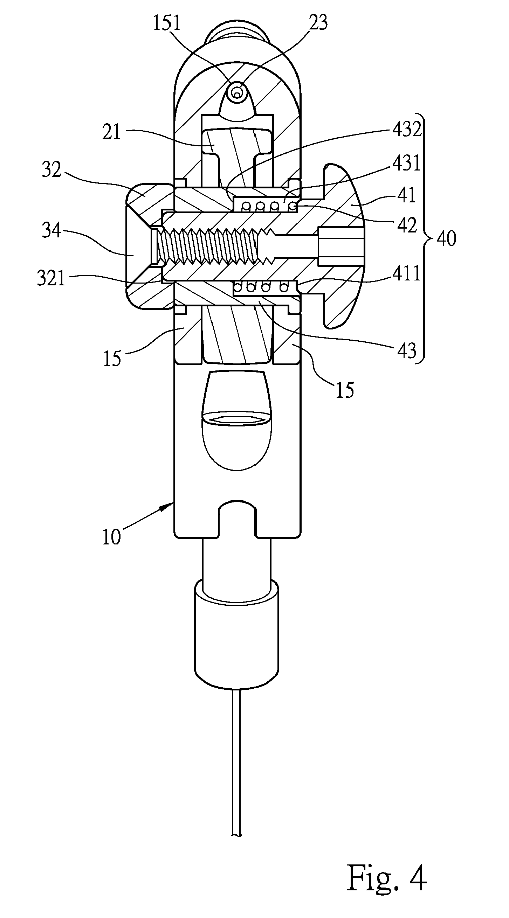

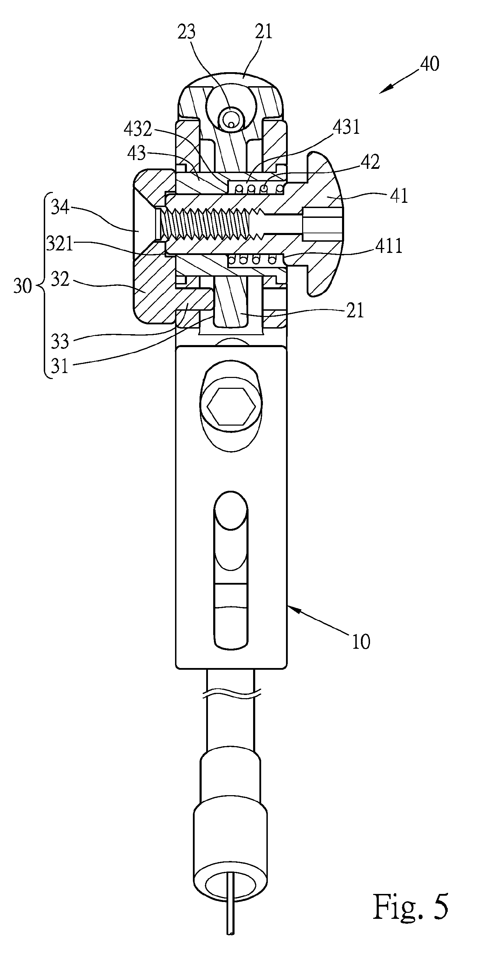

With reference to FIGS. 1 to 5, a cable control device for a bicycle according to a preferred embodiment of the present invention comprises: a clamping assembly 10 mounted on a bicycle frame 60, a cable controlling set 20 connected with the clamping assembly 10, a positioning assembly 30 connecting with the clamping assembly 10 and the cable controlling set 20, and a returning set 40 fitted with the clamping assembly 10, the cable controlling set 20, and the positioning assembly 30.

The clamping assembly 10 includes a first clamper 11 and a second clamper 12 rotatably connected with the first clamper 11 by using a fixing bolt 13 so as to form a clamping portion 14 for clamping the bicycle frame 60; the first clamper 11 has a connecting holder 15 in a C shape; the connecting holder 15 has a connection groove 151 defined in a top end thereof and has a C-shaped accommodation groove formed in a lower end thereof; the first clamper 11 and the second clamper 12 are rotatably connected together so as to form a hollow portion 16 in the clamping portion 14.

The cable controlling set 20 is rotatably accommodated and rotates in the C-shaped accommodation groove of the connecting holder 15 by using a body 21; the cable controlling set 20 includes the body 21, a rotary lever 22 extending outwardly from the body 21, a first protective hose 23 formed in a hollow tube shape and retained in the connection groove 151, a second protective hose 24 formed in a hollow tube shape coupled with the clamping assembly 10, and a steel cable 25, a first end of which inserts into the body 21, and a second end of the steel cable 25 inserts through the first protective hose 23 and the second protective hose 24 to connect with a bicycle apparatus, such that the rotary lever 22 is pressed or pulled to drive the bicycle apparatus to operate.

The positioning assembly 30 is coupled with the connecting holder 15 of the clamping assembly 10 and includes at least one fixing portion 31 arranged on the body 21, wherein the at least one fixing portion 31 has a tilted guiding face 312 and a locking extension 313 formed on a first end of one side surface thereof and adjacent to the tilted guiding face 312, and the at least one fixing portion 31 also has a flat guiding face 311 formed on a second end of the one side surface thereof and connecting with the tilted guiding face 312. The cable controlling set 20 is coupled with a connector 32 on which a post 33 extends outwardly and inserts into the connecting holder 15 of the first clamper 11, wherein a distal end of the post 33 abuts against the at least one fixing portion 31, such that the rotary lever 22 is pulled or pressed to drive the body 21 and the at least one fixing portion 31 to rotate, and the at least one fixing portion 31 pushes the post 33 and the connector 32 to move linearly, wherein the post 33 contacts with the flat guiding face 311, the tilted guiding face 312 and the locking extension 313 in turn, and when the post 33 contacts with the locking extension 313, the body 21 and the rotary lever 22 are locked. The positioning assembly 30 further includes a screwing element 34 configured to fix the connector 32 into the clamping assembly 10. Furthermore, the connector 32 has a contacting trough 321 facing the cable controlling set 20.

The returning set 40 is coaxial with the positioning assembly 30 and is in connection with the connecting holder 15 and the positioning assembly 30. The returning set 40 includes a return element 41 contacting with the connector 32 and screwing with the screwing element 34, and the return element 41 inserts into the contacting trough 321. The returning set 40 also includes a resilient element 42 for pushing the return element 41 back to an original position and includes a fitting sleeve 43 which is formed in a hollow cylinder shape, fitted on the return element 41 and fixed in the connecting holder 15 of the clamping assembly 10, such that the screwing element 34, the connector 32, the post 33, and the return element 41 move simultaneously in the fitting sleeve 43. The fitting sleeve 43 has a stepped trench 431 defined around an inner wall thereof so as to accommodate the resilient element 42 and has a first tab 432 formed on one end thereof, wherein a diameter of the stepped trench 431 is more than the first tab 432, and the return element 41 has a head end, a shaft portion and a second tab 411 defined between the head end and the shaft portion. A first end of the resilient element 42 abuts against the first tab 432, and a second end of the resilient element 42 is biased against the second tab 411. The return element 41 pushes the connector 32 toward the connecting holder 15 so that the post 33 remove from the locking extension 313, and the bicycle apparatus drags the steel cable 25 to pull the body 21 back to an original position.

Thereby, the returning set 40 and the positioning assembly 30 are coaxial with each other and are connected with the clamping assembly 10, such that the cable controlling set 20 is rotatably fixed, locked, unlocked, returned back to an original position. Preferably, the returning set 40 and the positioning assembly 30 are connected with two side surfaces of the clamping assembly 10 based on using requirements and are simplified to reduce production cost.

It is to be noted that the connecting holder 15, the connection groove 151, and the hollow portion 16 are integrally connected with the first clamper 11, the hollow portion 16 is integrally formed on a predetermined position of the second clamper 12, and the rotary lever 22, the flat guiding face 311, the tilted guiding face 312, and the locking extension 313 are integrally formed on the body 21.

In assembly, a first end of the first clamper 11 is rotatably connected with a first end of the second clamper 12, and the fixing bolt 13 is screwed with a second end of the first clamper 11 and a second end of the second clamper 12, hence the first clamper 11 and the second clamper 12 define the clamping portion 14. Then, the at least one fixing portion 31 on the body 21 is accommodated in the C-shaped accommodation groove of the connecting holder 15, the fitting sleeve 43 is fitted into the connecting holder 15, such that the body 21 rotates along the fitting sleeve 43. Thereafter, a first end of the steel cable 25 is fixed in the body 21 and a second end of the steel cable 25 is inserted through the first protective hose 23 and the second protective hose 24 so as to connect with the bicycle apparatus, hence the first protective hose 23 retains in the connection groove 151. The resilient element 42 is inserted and moves in the fitting sleeve 43 from a first side surface of the connecting holder 15, the stepped column of the return element 41 is fitted into the fitting sleeve 43 via the resilient element 42, and the head end of the return element 41 exposes outside the first side surface of the connecting holder 15. The connector 32 is coupled with a second side surface of the connecting holder 15 so that the post 33 inserts into the connecting holder 15, and the screwing element 34 is screwed with the return element 41 through the connector 32 and the fitting sleeve 43, hence the resilient element 42 is biased against the return element 41, and the post 33 contacts with the at least one fixing portion 31.

As fixing the cable control device of the present invention on the bicycle frame 60, the fixing bolt 13 is removed from the first clamper 11 and the second clamper 12, the clamping portion 14 surrounds the bicycle frame 60, and the fixing bolt 13 is screwed with the first clamper 11 and the second clamper 12 so that the first clamper 11 and the second clamper 12 clamp the bicycle frame 60 securely. It is to be noted that the bicycle frame 60 is any one of a handlebar, a top tube, a down tube, a seat post, a seat stay, and a chain stay.

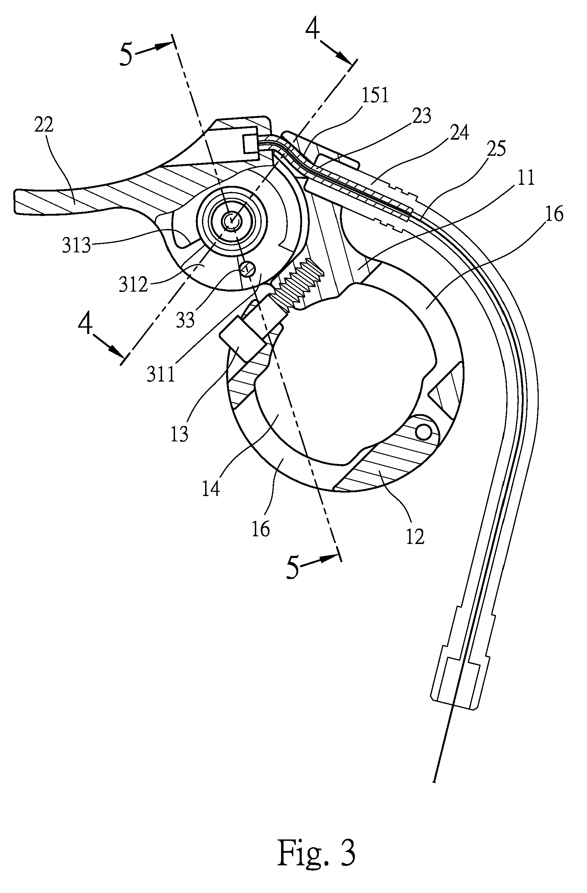

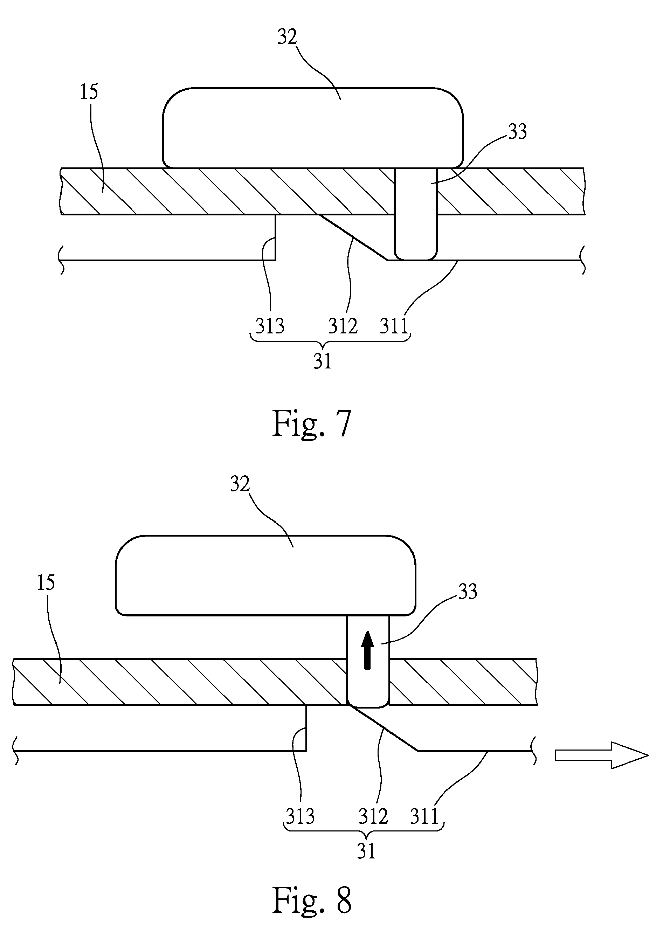

Referring to FIGS. 3 to 5 and 7, as the positioning assembly 30 is in a unlocking state, the rotary lever 22 is rotated to drive the body 21 to revolve, and the post 33 contacts with the flat guiding face 311 of the at least one fixing portion 31, hence the cable controlling set 20 is unlocked so that the bicycle apparatus operates smoothly.

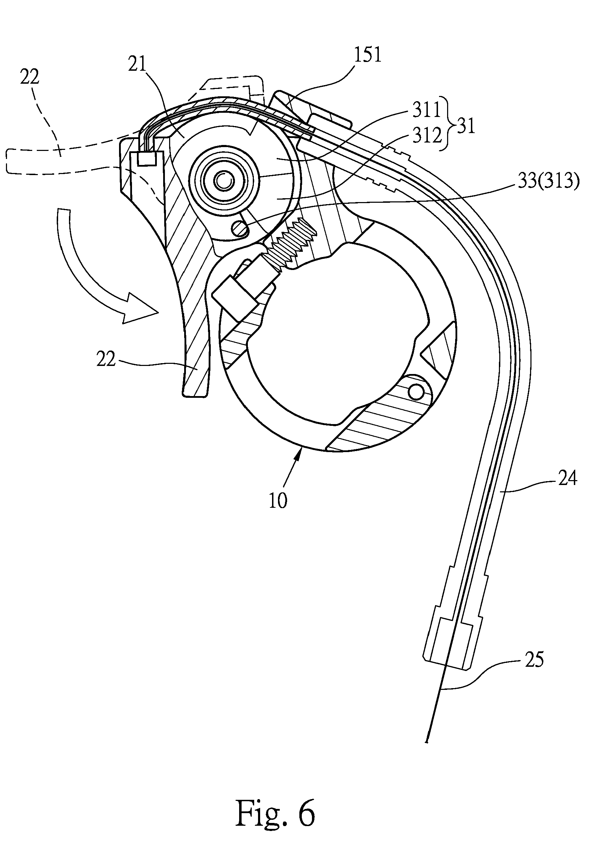

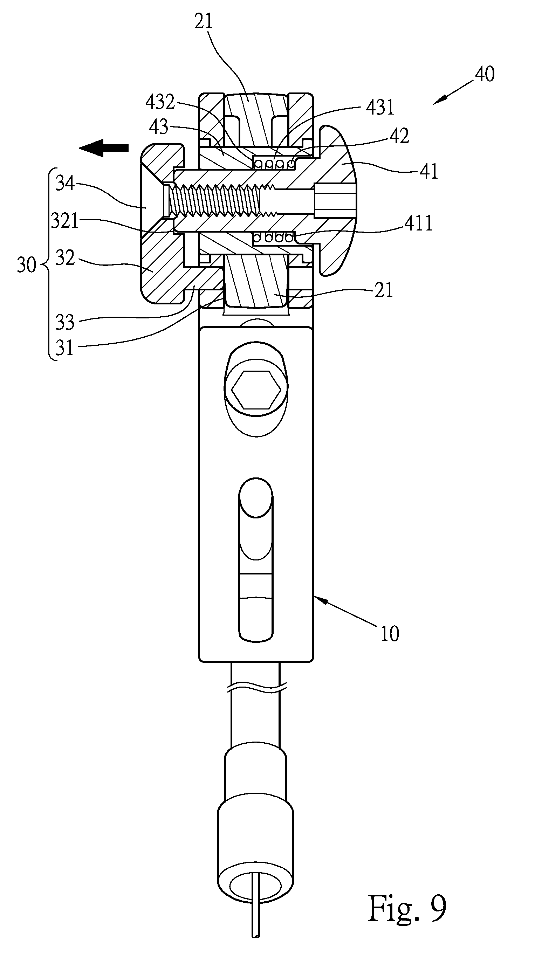

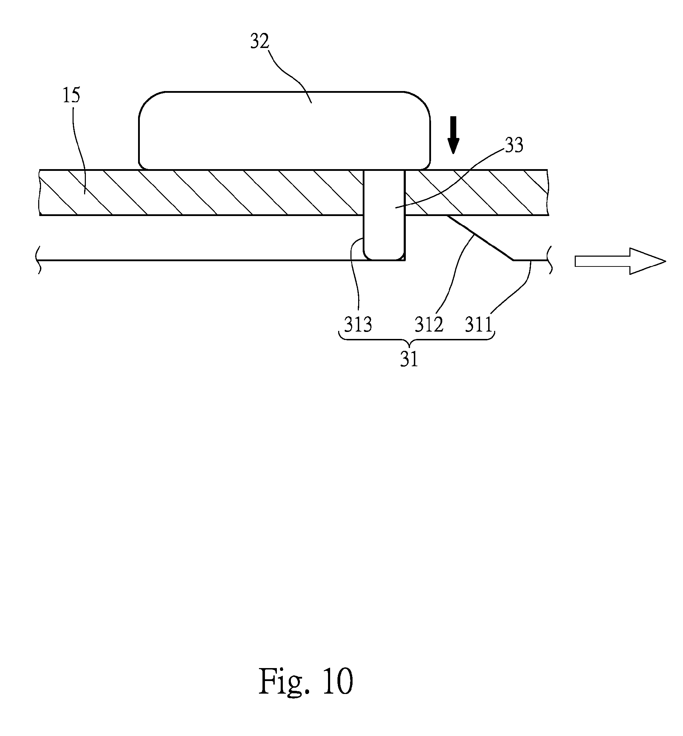

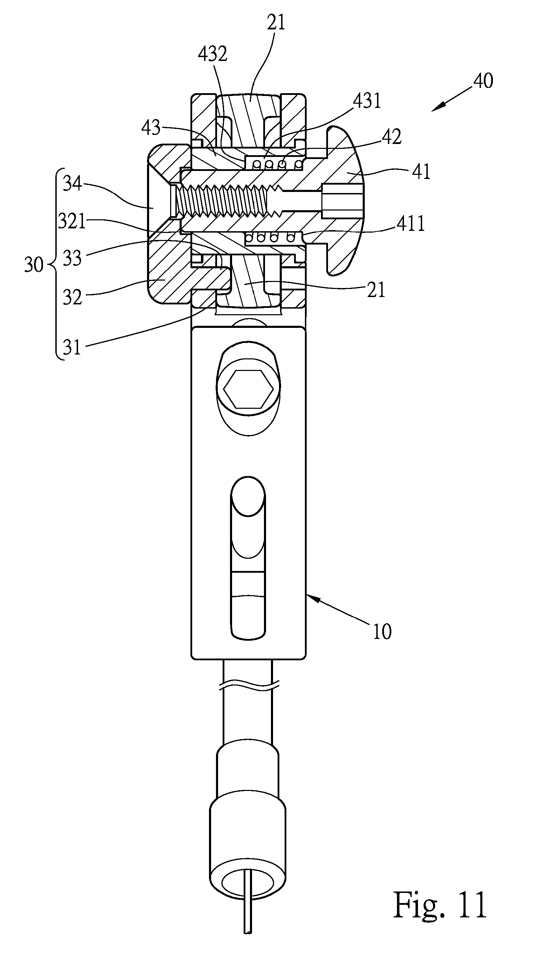

With reference to FIGS. 6 to 11, as desiring to lock the positioning assembly 30, the rotary lever 22 is pressed to drive the body 21 to rotate, the post 33 contacts with the flat guiding face 311, the tilted guiding face 312, and the locking extension 313. For example, when the post 33 contacts with the tilted guiding face 312, the return element 41 is pushed by the tilted guiding face 312 to move toward the connector 32, and the resilient element 42 is pressed by the return element 41, hence a gap between the connector 32 and the connecting holder 15 forms. When the post 33 contacts with the locking extension 313, the resilient element 42 pushes the connector 32 to move toward the return element 41, thus locking the positioning assembly 30.

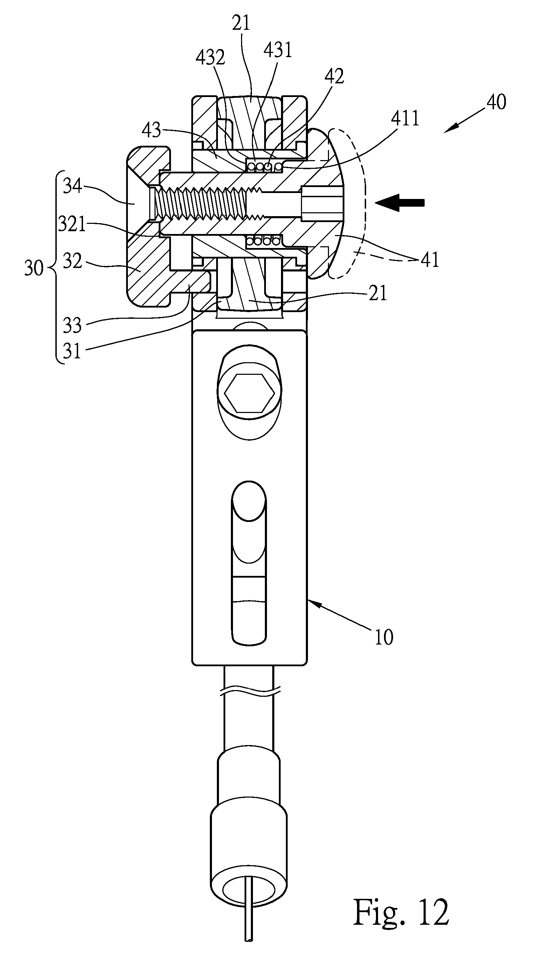

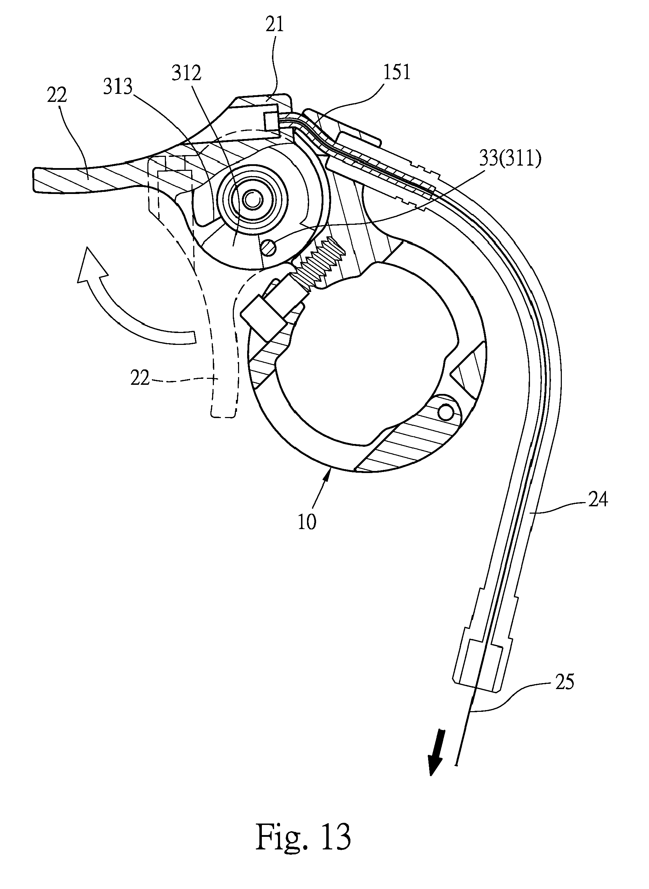

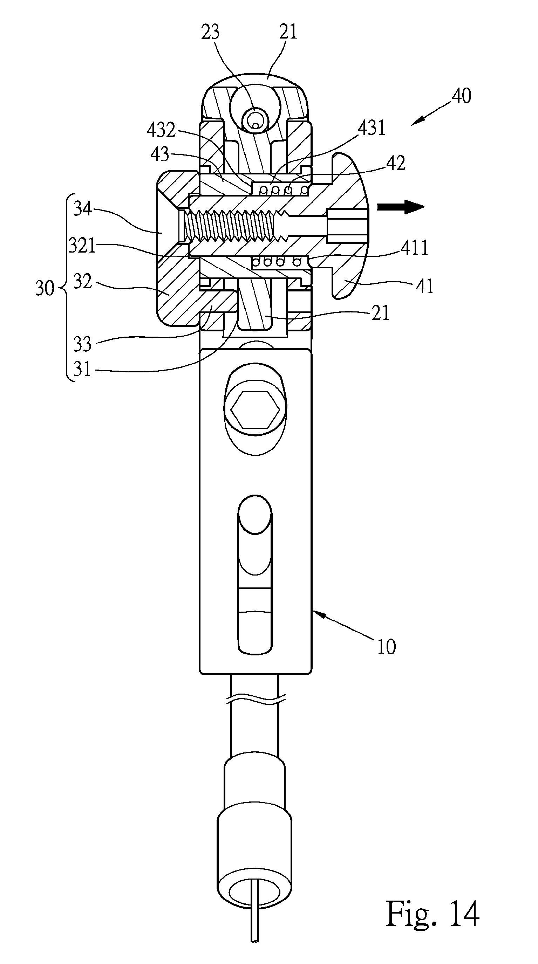

As shown in FIGS. 12 to 14, the return element 41 is pressed to drive the connector 32 and the post 33 to move, wherein when the post 33 removes from the locking extension 313, the steel cable 25 pulls the body 21 and the at least one fixing portion 31 to rotate back to their original positions. Thereafter, the return element 41 is released so that the resilient element 42 pushes the connector 32 to move toward the return element 41 until the post 33 contacts with the flat guiding face 313, thus unlocking the positioning assembly 30.

When the bicycle apparatus is a shock absorber mounted on a front fork or a rear fork, the cable control device of the present invention is applied to lock or unlock the shock absorber. For example, when the positioning assembly 30 is in a locking state, the shock absorber is turned on to absorb vibration. When the positioning assembly 30 is in the unlocking state, the shock absorber is turned off to stop absorbing the vibration.

When the bicycle apparatus is a position adjuster mounted on the seat post, the cable control device of the present invention is employ to adjust height, position or angle of the seat post. For instance, when the positioning assembly 30 is in the locking state, the position adjuster is turned on to adjust the height, the position or the angle of the seat post. When the positioning assembly 30 is in the unlocking state, the position adjuster is turned off to stop adjusting the height, the position or the angle of the seat post.

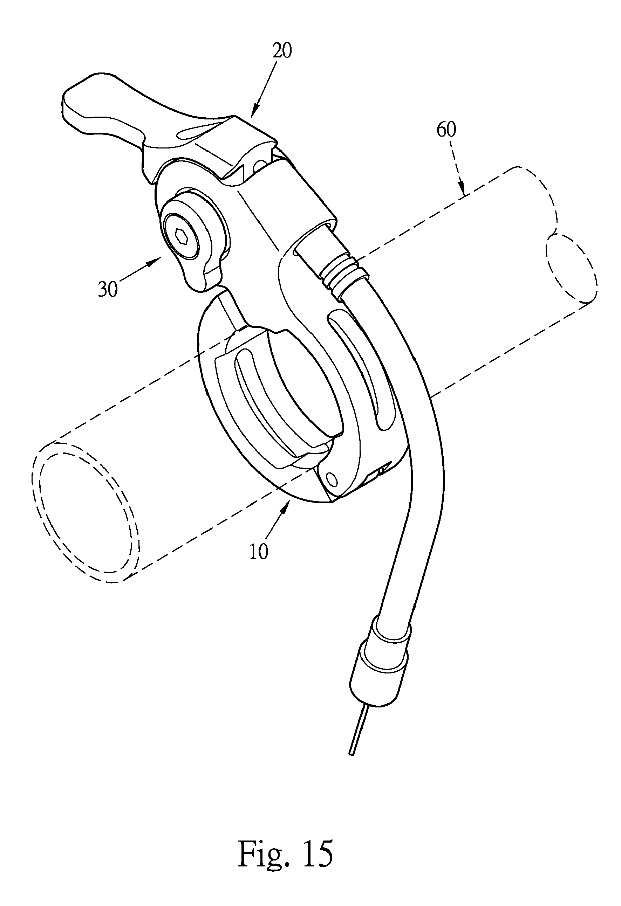

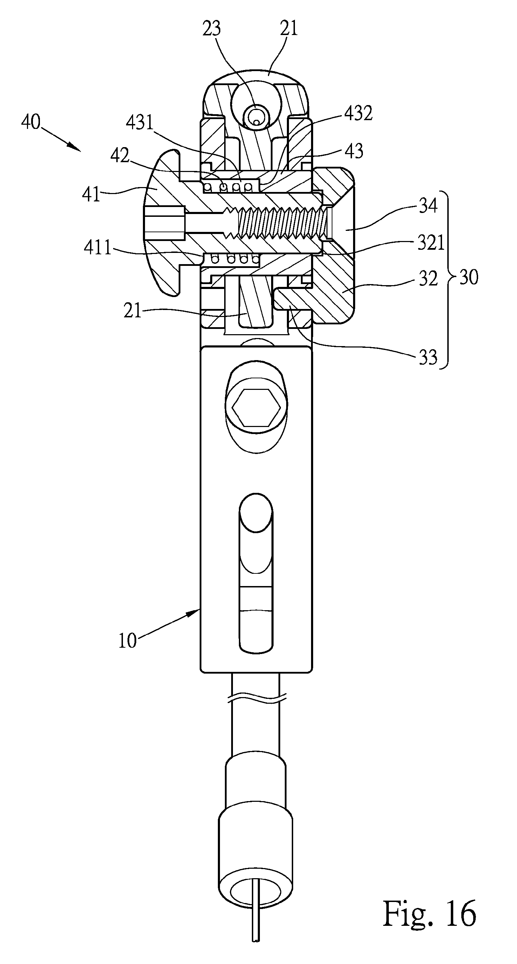

As illustrated in FIGS. 15 and 16, the positioning assembly 30 is connected with the second side surface of the connecting holder 15, and the returning set 40 is coupled with the first side surface of the connecting holder 15 according to using requirements.

Thereby, the cable control device of the present invention has advantages as follows:
1. The returning set 40 and the positioning assembly 30 are connected with body 21 and are accommodated in the C-shaped accommodation groove of the connecting holder 15 securely.
2. The returning set 40 and the positioning assembly 30 are coaxial with each other so as to move simultaneously and to change a distance between the post 33 and the at least one fixing portion 31, thus locking, unlocking, and releasing the bicycle apparatus.
3. Each of the positioning assembly 30 and the returning set 40 is connected with the first side surface or the second side surface of the connecting holder 15 according to using requirements.
4. Each of the positioning assembly 30 and the returning set 40 is connected with the first side surface or the second side surface of the connecting holder 15 of the clamping assembly 10, and the returning set 40 and the positioning assembly 30 are connected with body 21, thus simplifying manufacture process, reducing production cost, and obtaining easy operation.
5. The cable control device of the present invention is simplified by connecting the returning set 40 and the positioning assembly 30 with the first side surface or the second side surface of the connecting holder 15 of the clamping assembly 10, thus decreasing friction among related components and prolonging service life.

Furthermore, when a distance between the body 21 and the connecting holder 15 does not change, the post 33 moves along the at least one fixing portion 31 so as to push the connector 32 and the return element 41, thus locking, unlocking, and returning the positioning assembly 30. For example, when the post 33 contacts with the flat guiding face 312, the positioning assembly 30 is unlocked; when the post 33 contacts with the tilted guiding face 312, the positioning assembly 30 is unlocked, and the connector 32 and the return element 41 are pushed outward. While the post 33 contacts with the locking extension 313, the positioning assembly 30 is locked, the returning set 40 pushes the positioning assembly 30 so that the pose 33 removes from the at least one fixing portion 31, and the cable controlling set 20 and the positioning assembly 30 return their original positions.

Preferably, the first protective hose 23 covers the steel cable 25 and is limited in the connecting groove 151, thus protecting the steel cable 25 and maintaining operation of the steel cable 25 well.

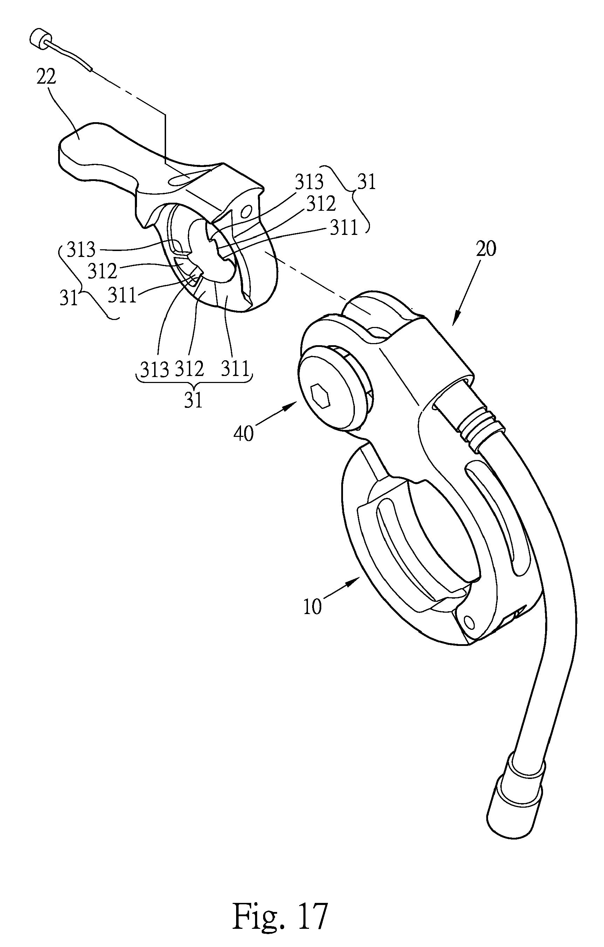

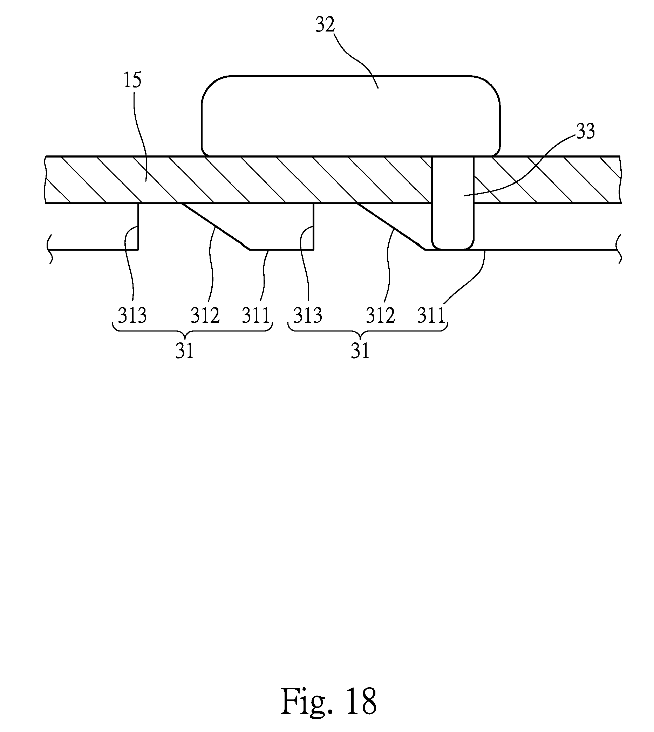

In another embodiment, as illustrated in FIGS. 17 and 18, a plurality of fixing portions 31 are arranged on the body 21 so as to provide multi-section positioning of the bicycle apparatus.

Accordingly, the cable control device of the present invention locks, unlocks, and returns the bicycle frame. The returning set and the positioning assembly are coaxial with each other so as to move simultaneously and to change the distance between the post and the at least one fixing portion, thus locking, unlocking, and returning the bicycle apparatus easy. Preferably, the cable control device is simplified to reduce production cost and obtain easy operation.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A cable control device for a bicycle being mounted on a bicycle frame and comprising:
a clamping assembly including a first clamper and a second clamper rotatably connected with the first clamper by using a fixing bolt so as to form a clamping portion for clamping the bicycle frame;
a cable controlling set rotatably connected with the clamping assembly by using a body and rotatably moving on the clamping assembly, the cable controlling set including a rotary lever extending outwardly from the body, and the cable controlling set including a steel cable, a first end of which inserts into the body, and a second end of the steel cable connecting with a bicycle apparatus, such that the rotary lever is pressed or pulled to drive the bicycle apparatus to operate;
a positioning assembly coupled with the clamping assembly and including at least one fixing portion arranged on the body, wherein the at least one fixing portion has a tilted guiding face and a locking extension formed on a first end of one side surface thereof and adjacent to the tilted guiding face, the cable controlling set is coupled with a connector on which a post extends outwardly and inserts into the first clamper, wherein a distal end of the post abuts against the at least one fixing portion, such that the rotary lever is pulled or pressed to drive the body and the at least one fixing portion to rotate, and the at least one fixing portion pushes the post and the connector to move linearly, wherein when the post contacts with the locking extension, the body and the rotary lever are locked;
a returning set being coaxial with the positioning assembly and being in connection with the clamping assembly and the positioning assembly, wherein the returning set includes a return element contacting with the connector and screwing with the screwing element, and the return element inserts into the connector, the returning set also includes a resilient element for pushing the return element back to an original position, wherein the return element pushes the connector away from the clamping assembly so as to remove the post from the locking extension, and the steel cable pulls the body back to an original position.

2. The cable control device for a bicycle as claimed in claim 1, wherein the positioning assembly further includes a screwing element configured to fix the connector into the clamping assembly and to screw with the return element, such that the screwing element, the connector, the post, and the return element move simultaneously.

3. The cable control device for a bicycle as claimed in claim 1, wherein the returning set includes a fitting sleeve which is formed in a hollow cylinder shape, fitted on the return element and fixed in the clamping assembly; the fitting sleeve has a stepped trench defined around an inner wall thereof so as to accommodate the resilient element; the resilient element is inserted and moves in the fitting sleeve; a first end of the resilient element abuts against the return element, and a second end of the resilient element is biased against the stepped trench.

4. The cable control device for a bicycle as claimed in claim 3, wherein the fitting sleeve also has a first tab formed on one end thereof, wherein a diameter of the stepped trench is more than the first tab; and the return element has a head end, a shaft portion and a second tab defined between the head end and the shaft portion; the first end of the resilient element abuts against the first tab, and the second end of the resilient element is biased against the second tab.

5. The cable control device for a bicycle as claimed in claim 1, wherein the at least one fixing portion also has a flat guiding face formed on a second end of the one side surface thereof and connecting with the tilted guiding face; when the rotary lever is rotated, the post contacts with the flat guiding face, the tilted guiding face and the locking extension of the at least one fixing portion in turn.

6. The cable control device for a bicycle as claimed in claim 1, wherein the first clamper has a connecting holder in a C shape, the positioning assembly and the returning set are coupled with the connecting holder; the body of the cable controlling set is rotatably accommodated in the C-shaped accommodation groove of the connecting holder.

7. The cable control device for a bicycle as claimed in claim 5, wherein the connecting holder has a connection groove defined in a top end thereof; the cable controlling set includes a first protective hose formed in a hollow tube shape and retained in the connection groove.

8. The cable control device for a bicycle as claimed in claim 1, wherein the cable controlling set includes a second protective hose formed in a hollow tube shape and inserting through the second protective hose.

9. The cable control device for a bicycle as claimed in claim 1, wherein the first clamper and the second clamper are rotatably connected together so as to form a hollow portion in the clamping portion.

10. The cable control device for a bicycle as claimed in claim 1, wherein the connector has a contacting trough facing the cable controlling set and accommodating the return element.
